# EUROPEAN PATENT APPLICATION

(11) **EP 4 568 417 A1**
(43) Date of publication of application: **11.06.2025**
(21) Application number: 23850016.9
(22) Date of filing: 28.07.2023
(51) Int. Cl.: H04W 88/04, H04W 92/18

(54) **TERMINAL DEVICE, METHOD, AND INTEGRATED CIRCUIT**

(30) Priority: 01.08.2022 JP 2022122522
(71) Applicant: Sharp Kabushiki Kaisha, Sakai City, Osaka 590-8522 (JP)
(72) Inventor: KAWANO, Takuma, Sakai City, Osaka 590-8522 (JP); YAMADA, Shohei, Sakai City, Osaka 590-8522 (JP); TSUBOI, Hidekazu, Sakai City, Osaka 590-8522 (JP); INOUE, Kyosuke, Sakai City, Osaka 590-8522 (JP)
(74) Representative: Müller-Boré & Partner Patentanwälte PartG mbB
(86) International application number: PCT/JP2023/027755
(87) International publication number: WO 2024/029461

(57) **Abstract**

A terminal apparatus capable of sidelink communication includes a processing unit, a receiver configured to receive a discovery message from a first terminal apparatus, and a transmitter. The processing unit determines information to be provided to a second terminal apparatus, based on Reference Signal Received Power (RSRP) of the discovery message received from the first terminal apparatus, and the transmitter transmits, to the second terminal apparatus, a discovery message including the information.

## Description

### Technical Field

The present invention relates to a terminal apparatus, a method, and an integrated circuit.

This application claims priority to JP 2022-122522 filed on August 1, 2022, the contents of which are incorporated herein by reference.

### Background Art

In the 3rd Generation Partnership Project (3GPP, trade name) being a standardization project for cellular mobile communication systems, technical study and standardization are being carried out regarding cellular mobile communication systems including radio access, core networks, and services.

For example, technical study and standardization of Evolved Universal Terrestrial Radio Access (E-UTRA) have begun in the 3GPP as a Radio Access Technology (RAT) for cellular mobile communication systems for the 3.9th generation and the 4th generation. Technical study and standardization of enhanced technology of E-UTRA are still being carried out in the 3GPP. Note that E-UTRA may also be referred to as Long TermEvolution (LTE: trade name), and its enhanced technology may also be referred to as LTE-Advanced (LTE-A) and LTE-Advanced Pro (LTE-A Pro).

Technical study and standardization of New Radio or NR Radio access (NR) have begun in the 3GPP as a Radio Access Technology (RAT) for cellular mobile communication systems for the 5th Generation (5G). Technical study and standardization of enhanced technology of NR are still carried out in the 3GPP.

### Citation List

### Non Patent Literature

NPL 1: 3GPP TS 38.331 v17.0.0, "Evolved Universal Terrestrial Radio Access (E-UTRA); Radio Resource Control (RRC); Protocol specifications" pp. 37-1107
NPL 2: 3GPP TS 38.321 v17.0.0, "NR; Medium Access Control (MAC) protocol specification" pp. 17-104
NPL 3: 3GPP TS 38.213 v17.2.0 "NR; Physical layer procedures for control" pp. 14-20
NPL 4: 3GPP TS 38.215 v17.1.0, "NR; Physical layer measurements" pp. 16-18
NPL 5: 3GPP TS 23.304 v17.1.0, "Proximity based Services (ProSe) inthe 5G System (5GS)" pp. 12-97
NPL 6: 3GPP TS 38.300 v17.0.0, "NR; NR and NG-RAN Overall Description" pp. 31-170
NPL 7: RP-221262, "Revised WID on NR sidelink relay enhancements"

### Summary of Invention

### Technical Problem

In the 3GPP, as an extended technique of NR, a technique called a sidelink has been studied in which a terminal apparatus and a terminal apparatus directly communicate with each other without an intervening core network. Furthermore, a technique (UE-to-UE relay) has started to be studied in which another terminal apparatus is added between the terminal apparatuses and communication among these terminal apparatuses is supported.

An aspect of the present invention is made in view of the circumstances described above, and has an object to provide a terminal apparatus, a base station apparatus, a communication method, and an integrated circuit that enable efficient communication control.

### Solution to Problem

In order to accomplish the object described above, an aspect of the present invention is contrived to provide the following means. Specifically, an aspect of the present invention is a terminal apparatus capable of sidelink communication, the terminal apparatus including a processing unit; a receiver configured to receive a discovery message for a UE-to-UE Relay from a first terminal apparatus; and a transmitter. The processing unit determines information to be provided to a second terminal apparatus, based on Reference Signal Received Power (RSRP) of the discovery message received from the first terminal apparatus, and the transmitter transmits, to the second terminal apparatus, a discovery message including the information.

An aspect of the present invention is a method for a terminal apparatus capable of sidelink communication, the method including the steps of receiving a discovery message for a UE-to-UE Relay from a first terminal apparatus; determining information to be provided to a second terminal apparatus, based on Reference Signal Received Power (RSRP) of the discovery message received from the first terminal apparatus; and transmitting, to the second terminal apparatus, a discovery message including the information.

An aspect of the present invention is an integrated circuit to be mounted on a terminal apparatus capable of sidelink communication, the integrated circuit including a function of receiving a discovery message for a UE-to-UE Relay from a first terminal apparatus; a function of determining information to be provided to a second terminal apparatus, based on Reference Signal Received Power (RSRP) of the discovery message received from the first terminal apparatus; and a function of transmitting, to the second terminal apparatus, a discovery message including the information.

These comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Advantageous Effects of Invention

According to an aspect of the present invention, the terminal apparatus, the method, and the integrated circuit can implement efficient communication control processing.

### Brief Description of Drawings

FIG. 1 is a schematic diagram of a communication system according to the present embodiment.
FIG. 2 is a diagram of an example of a protocol architecture of a sidelink according to the present embodiment.
FIG. 3 is a diagram of an example of a protocol architecture of the sidelink according to the present embodiment.
FIG. 4 is a diagram of an example of a protocol architecture of the sidelink according to the present embodiment.
FIG. 5 is a block diagram illustrating a configuration of a terminal apparatus according to the present embodiment.
FIG. 6 is an example of processing related to discovery according to the present embodiment.
FIG. 7 is an example of processing related to discovery according to the present embodiment.

### Description of Embodiments

The present embodiment will be described below in detail with reference to the drawings.

Note that, in the present embodiment, terms of each node and entity, processing in each node and entity, and the like in a case that the radio access technology is NR and E-UTRA will be described. However, the present embodiment may be applied to another radio access technology. In the present embodiment, the terms of each node and entity may be other terms.

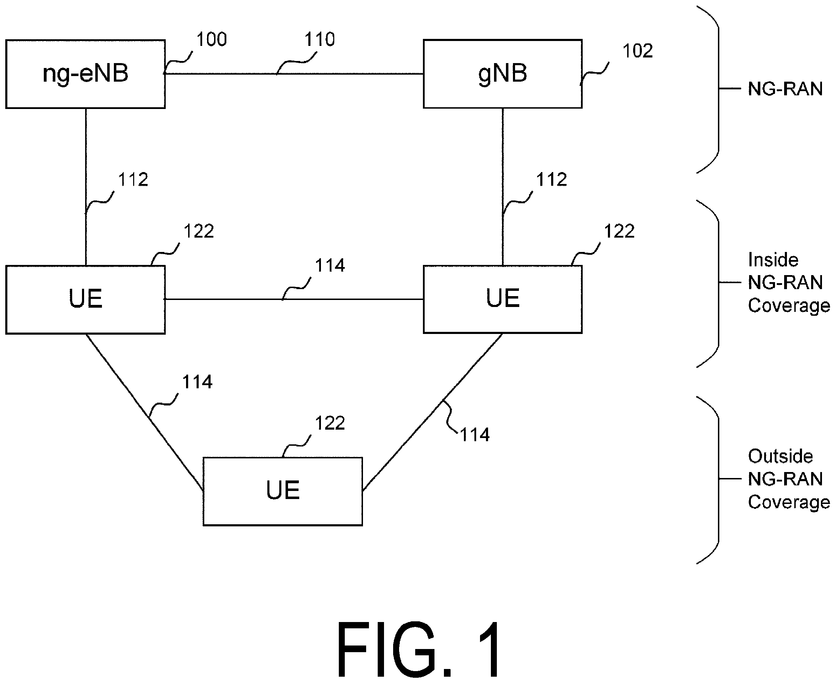

FIG. 1 is a schematic diagram of a communication system according to the present embodiment. Note that functions such as each node, radio access technology, core network, and interface to be described with reference to FIG. 1 are a part of functions closely related to the present embodiment, and other functions may be provided.

E-UTRA may be a radio access technology. The E-UTRA may be an air interface between a UE 122 and an ng-eNB 100. The air interface 112 between the UE 122 and the ng-eNB 100 may be referred to as a Uu interface. The ng E-UTRAN Node B (ng-eNB) 102 may be a base station apparatus of the E-UTRA. The ng-eNB 100 may have an E-UTRA protocol to be described below. The E-UTRA protocol may include an E-UTRA User Plane (UP) protocol to be described below and an E-UTRA Control Plane (CP) protocol to be described below. The ng-eNB 100 may terminate the E-UTRA user plane protocol and the E-UTRA control plane protocol for the UE 122. A radio access network including the eNB may be referred to as an E-UTRAN.

NR may be a radio access technology. The NR may be an air interface between the UE 122 and a gNB 102. The air interface 112 between the UE 122 and the gNB 102 may be referred to as a Uu interface. The g Node B (gNB) 102 may be a base station apparatus of NR. The gNB 102 may have an NR protocol to be described below. The NR protocol may include an NR User Plane (UP) protocol to be described below and an NR Control Plane (CP) protocol to be described below. The gNB 102 may terminate the NR user plane protocol and the NR control plane protocol for the UE 122.

Note that the interface 110 between the ng-eNB 100 and the gNB 102 may be referred to as an Xn interface. The ng-eNB and the gNB may be connected to the 5GC via an interface called an NG interface (not illustrated). The 5GC may be a core network. One or multiple base station apparatuses may connect to the 5GC via the NG interface.

A state in which connection to the base station apparatus only via the Uu interface is enabled may be referred to as Inside NG-RAN Coverage or In-Coverage (IC). A state in which connection to the base station apparatus only via the Uu interface is disabled may be referred to as Outside NG-RAN Coverage or Out-of-Coverage (OOC). The air interface 114 between the UE 122 and the UE 122 may be referred to as a PC5 interface. Communication between the UEs 122 via the PC5 interface may be referred to as sidelink (SL) communication. A terminal apparatus that can perform sidelink communication may be referred to as a terminal apparatus capable of sidelink communication.

Note that, in the following description, the ng-eNB 100 and/or the gNB 102 is also simply referred to as a base station apparatus, and the UE 122 is also simply referred to as a terminal apparatus or a UE. The PC5 interface is also simply referred to as PC5, and the Uu interface is also simply referred to as Uu.

The sidelink is a technique for performing direct communication between terminal apparatuses, and sidelink transmission and/or reception on the PC5 is performed inside the NG-RAN coverage and outside the NG-RAN coverage.

The NR SL communication has three transmission modes, and the SL communication is performed in one of the transmission modes with a pair of a Source Layer-2 identifier (Source Layer-2 ID) and a Destination Layer-2 identifier (Destination Layer-2 ID). The source layer-2 identifier and the destination layer-2 identifier may be referred to as a source L2ID and a destination L2ID, respectively. The three transmission modes are "Unicast transmission", "Groupcast transmission", and "Broadcast transmission".

Unicast transmission is characterized by (1) support of one PC5-RRC connection between paired UEs, (2) transmission and/or reception of control information and user traffic between UEs on a sidelink, (3) support of sidelink HARQ feedback, (4) transmit power control on the sidelink, (5) support of RLC AM, and (6) detection of a failure in radio link for PC5-RRC connection.

Groupcast transmission is characterized by (1) transmission and/or reception of user traffic between UEs belonging to a sidelink group and (2) support of sidelink HARQ feedback.

Broadcast transmission is characterized by (1) transmission and/or reception of user traffic between UEs on the sidelink.

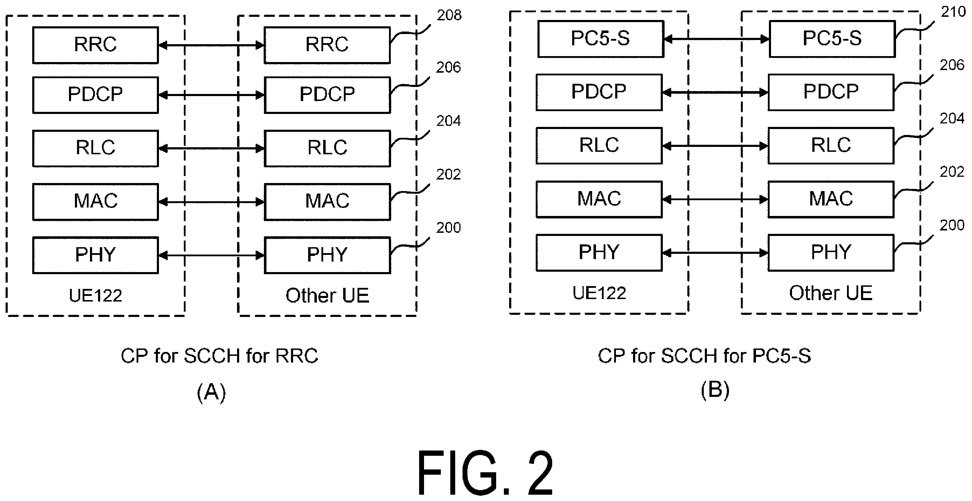

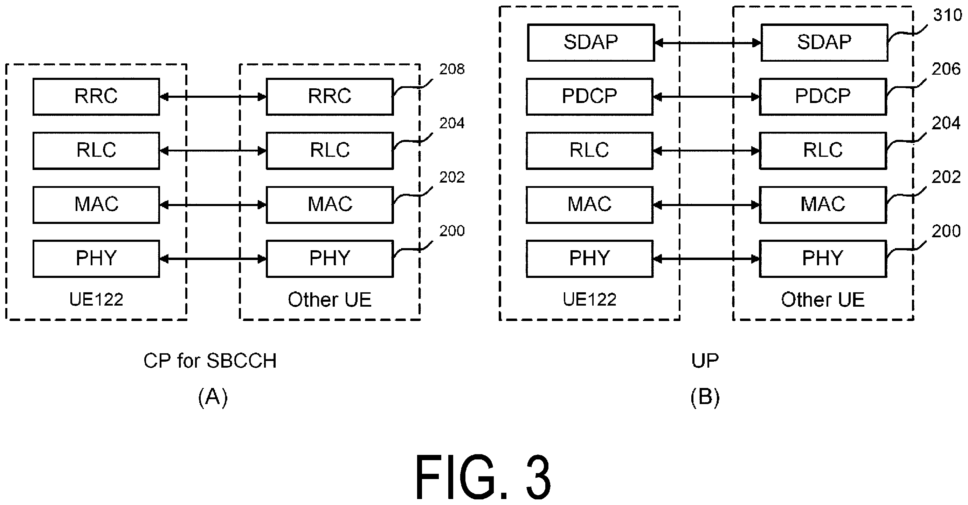

FIG. 2 and FIG. 3 are diagrams of an example of a protocol architecture in NR sidelink communication according to the present embodiment. Note that functions of each protocol to be described with reference to FIG. 2 and/or FIG. 3 are a part of functions closely related to the present embodiment, and other functions may be provided. Note that, in the present embodiment, the sidelink (SL) may be a link between a terminal apparatus and a terminal apparatus.

FIG. 2(A) is a diagram of a protocol stack of the Control Plane (CP) for an SCCH with RRC, which is configured on the PC5 interface. As illustrated in FIG. 2(A), the control plane protocol stack for the SCCH with RRC may include a Physical layer (PHY) 200 which is a radio physical layer, a Medium Access Control (MAC) 202 which is a medium access control layer, a Radio Link Control (RLC) 204 which is a radio link control layer, and a Packet Data Convergence Protocol (PDCP) 206 which is a packet data convergence protocol layer, and a Radio Resource Control (RRC) 208 which a radio resource control layer. FIG. 2(B) is a diagram of the protocol stack of the control plane for the SCCH with PC5-S, which is configured on the PC5 interface. As illustrated in FIG. 2(B), the control plane protocol stack for the SCCH with PC5-S may include the Physical layer (PHY) 200 which is a radio physical layer, the Medium Access Control (MAC) 202 which is a medium access control layer, the Radio Link Control (RLC) 204 which is a radio link control layer, and the Packet Data Convergence Protocol (PDCP) 206 which is a packet data convergence protocol layer, and a PC5 Signalling (PC5-S) 210 which is a PC5 signaling layer.

FIG. 3(A) is a diagram of the protocol stack of the control plane for an SBCCH, which is configured on the PC5 interface. As illustrated in FIG. 3(A), the control plane protocol stack for the SBCCH may include the Physical layer (PHY) 200 which is a radio physical layer, the Medium Access Control (MAC) 202 which is a medium access control layer, the Radio Link Control (RLC) 204 which is a radio link control layer, and the Radio Resource Control 208 (RRC) which is a radio resource control layer. FIG. 3(B) is a diagram of the protocol stack of the User Plane (UP) for an STCH, which is configured on the PC5 interface. As illustrated in FIG. 3(B), the control plane protocol stack for the STCH may include the Physical layer (PHY) 200 which is a radio physical layer, the Medium Access Control (MAC) 202 which is a medium access control layer, the Radio Link Control (RLC) 204 which is a radio link control layer, the Packet Data Convergence Protocol (PDCP) 206 which is a packet data convergence protocol layer, and a Service Data Adaptation Protocol (SDAP) 310 which is a service data adaptation protocol layer.

Note that an Access Stratum (AS) layer may be a layer including a part or all of the PHY 200, the MAC 202, the RLC 204, the PDCP 206, the SDAP 310, and the RRC 208. The PC5-S 210 and a Discovery 400 described below may be layers higher than the AS layer.

Note that the present embodiment may use terms such as a PHY (PHY layer), a MAC (MAC layer), an RLC (RLC layer), a PDCP (PDCP layer), an SDAP (SDAP layer), an RRC (RRC layer), and a PC5-S (PC5-S layer). In this case, the PHY (PHY layer), the MAC (MAC layer), the RLC (RLC layer), the PDCP (PDCP layer), the SDAP (SDAP layer), the RRC (RRC layer), and the PC5-S (PC5-S layer) may respectively be the PHY (PHY layer), the MAC (MAC layer), the RLC (RLC layer), the PDCP (PDCP layer), the SDAP (SDAP layer), the RRC (RRC layer), and the PC5-S (PC5-S layer) of the NR sidelink protocol. Note that, in a case that sidelink communication is performed using the E-UTRA technology, the SDAP layer may not be provided.

In the present embodiment, in a case that the protocol of E-UTRA and the protocol of NR are distinguished from each other, the PHY, the MAC, the RLC, the PDCP, and the RRC may be hereinafter respectively referred to as the PHY for E-UTRA or the PHY for LTE, the MAC for E-UTRA or the MAC for LTE, the RLC for E-UTRA or the RLC for LTE, the PDCP for E-UTRA or the PDCP for LTE, and the RRC for E-UTRA or the RRC for LTE. The PHY, the MAC, the RLC, the PDCP, and the RRC may respectively be referred to as an E-UTRA PHY or an LTE PHY, an E-UTRA MAC or an LTE MAC, an E-UTRA RLC or an LTE RLC, an E-UTRA PDCP or an LTE PDCP, an E-UTRA RRC or an LTE RRC, and the like. In a case that the protocol of E-UTRA and the protocol of NR are distinguished from each other, the PHY, the MAC, the RLC, the PDCP, and the RRC may respectively be referred to as a PHY for NR, a MAC for NR, an RLC for NR, an RLC for NR, and an RRC for NR. The PHY, the MAC, the RLC, the PDCP, and the RRC may respectively be referred to as an NR PHY, an NR MAC, an NR RLC, an NR PDCP, an NR RRC, and the like.

Entities in the AS layer of E-UTRA and/or NR will be described. An entity having a part or all of functions of the physical layer may be referred to as a PHY entity. An entity having a part or all of functions of the MAC layer may be referred to as a MAC entity. An entity having a part or all of functions of the RLC layer may be referred to as an RLC entity. An entity having a part or all of functions of the PDCP layer may be referred to as a PDCP entity. An entity having a part or all of functions of the SDAP layer may be referred to as an SDAP entity. An entity having a part or all of functions of the RRC layer may be referred to as an RRC entity. The PHY entity, the MAC entity, the RLC entity, the PDCP entity, the SDAP entity, and the RRC entity may respectively be replaced with a PHY, a MAC, an RLC, a PDCP, an SDAP, and an RRC.

Note that data provided from the MAC, the RLC, the PDCP, and the SDAP to a lower layer, and/or data provided to the MAC, the RLC, the PDCP, and the SDAP from a lower layer may be referred to as a MAC Protocol Data Unit (PDU), an RLC PDU, a PDCP PDU, and an SDAP PDU, respectively. Data provided to the MAC, the RLC, the PDCP, and the SDAP from an upper layer, and/or data provided from the MAC, the RLC, the PDCP, and the SDAP to an upper layer may be referred to as a MAC Service Data Unit (SDU), an RLC SDU, a PDCP SDU, and an SDAP SDU, respectively. A segmented RLC SDU may be referred to as an RLC SDU segment.

Here, the base station apparatus and the terminal apparatus exchange (transmit and/or receive) signals with each other in higherlayers. The higher layer may be referred to as an upper layer, and may be paraphrased with each other. For example, the base station apparatus and the terminal apparatus may transmit and/or receive an RRC message (also referred to as RRC signalling) in the Radio Resource Control (RRC) layer. In the Medium Access Control (MAC) layer, the base station apparatus and the terminal apparatus may transmit and/or receive a MAC Control Element (MAC CE). Additionally, the RRC layer of the terminal apparatus acquires system information broadcast from the base station apparatus. In this regard, the RRC message, the system information, and/or the MAC control element are also referred to as higher layer signaling or a higher layer parameter. Each of the parameters included in the higher layer signaling received by the terminal apparatus may be referred to as a higher layer parameter. For example, in the processing of the PHY layer, the higher layer means a higher layer as viewed from the PHY layer, and thus may mean one or multiple of the MAC layer, the RRC layer, an RLC layer, a PDCP layer, a Non Access Stratum (NAS) layer, and the like. For example, in the processing of the MAC layer, the higher layer may mean one or multiple of the RRC layer, the RLC layer, the PDCP layer, the NAS layer, and the like.

On the PC5 interface, the terminal apparatuses exchange (transmit and/or receive) signals with each other in higher layers. The terminal apparatuses may transmit and/or receive an RRC message (also referred to as RRC signalling) in the Radio Resource Control (RRC) layer. In the Medium Access Control (MAC) layer, the terminal apparatuses may transmit and/or receive a MAC Control Element (MAC CE). In this regard, the RRC message and/or the MAC control element are also referred to as higher layer signaling or a higher layer parameter. Each of the parameters included in the higher layer signaling received by the terminal apparatus may be referred to as a higher layer parameter. For example, in the processing of the PHY layer, the higher layer means a higher layer as viewed from the PHY layer, and thus may mean one or multiple of the MAC layer, the RRC layer, the RLC layer, the PDCP layer, the PC5-S layer, the Discovery layer, and the like. For example, in the processing of the MAC layer, the higher layer may mean one or multiple of the RRC layer, the RLC layer, the PDCP layer, the PC5-S layer, the Discovery layer, and the like.

Hereinafter, "A is given (provided) in the higher layer" or "A is given (provided) by the higher layer" may mean that the higher layer (mainly the RRC layer, the MAC layer, or the like) of the terminal apparatus receives A from the base station apparatus or another terminal apparatus, and that the received A is given (provided) from the higher layer of the terminal apparatus to the physical layer of the terminal apparatus. For example, "a higher layer parameter being provided" in the terminal apparatus may mean that higher layer signaling is received from the base station apparatus or another terminal apparatus, and a higher layer parameter included in the received higher layer signaling is provided from the higher layer of the terminal apparatus to the physical layer of the terminal apparatus. A higher layer parameter being configured for the terminal apparatus may mean that the higher layer parameter is given (provided) to the terminal apparatus. For example, a higher layer parameter being configured for the terminal apparatus may mean that the terminal apparatus receives higher layer signaling from the base station apparatus or another terminal apparatus and configures the received higher layer parameter in the higher layer. However, a higher layer parameter being configured for the terminal apparatus may include a default parameter given in advance being configured in the higher layer of the terminal apparatus. In description of transmission of an RRC message from the terminal apparatus to the base station apparatus or another terminal apparatus, the expression that a message is submitted from the RRC entity of the terminal apparatus to a lower layer may be used. In the terminal apparatus, "submitting a message to a lower layer" from the RRC entity may mean submitting a message to the PDCP layer. In the terminal apparatus, "submitting a message to a lower layer" from the RRC layer may mean submitting the message of the RRC to a PDCP entity corresponding to each SRB (SRB0, SRB1, SRB2, SRB3, or the like) because the message is transmitted using the SRB. In a case that the RRC entity of the terminal apparatus receives an indication from the lower layer, the lower layer may mean one or multiple of the PHY layer, the MAC layer, the RLC layer, the PDCP layer, and the like.

An example of the functions of the PHY will be described. The PHY of the terminal apparatus may have a function of transmitting and/or receiving transmitted data to and/or from the PHY of another terminal apparatus via a sidelink (SL) Physical Channel. The PHY may be connected to an upper MAC with a Transport Channel. The PHY may deliver data to the MAC via the transport channel. The PHY may be provided with data from the MAC via the transport channel. In the PHY, in order to identify various pieces of control information, a Radio Network Temporary Identifier (RNTI) may be used.

Here, the physical channels will be described. The physical channels used for radio communication between the terminal apparatus and another terminal apparatus may include the following physical channels.

Physical Sidelink Broadcast CHannel (PSBCH)
Physical Sidelink Control CHannel (PSCCH)
Physical Sidelink Shared CHannel (PSSCH)
Physical Sidelink Feedback CHannel (PSFCH)

The PSBCH may be used to broadcast system information required by the terminal apparatus.

The PSCCH may be used to indicate resources or other transmission parameters for the PSSCH.

The PSSCH may be used to transmit data and control information related to HARQ/CSI feedback to another terminal apparatus.

The PSFCH may be used to carry HARQ feedback to another terminal apparatus.

An example of the functions of the MAC will be described. The MAC may be referred to as a MAC sublayer. The MAC may have a function of mapping various Logical Channels to their corresponding transport channels. The logical channel may be identified with a Logical Channel Identity (or Logical Channel ID). The MAC may be connected to an upper RLC with a logical channel. The logical channel may be classified into a control channel for transmitting control information and a traffic channel for transmitting user information depending on the type of information to be transmitted. The MAC may have a function of multiplexing MAC SDUs belonging to one or multiple different logical channels and providing the multiplexed MAC SDUs to the PHY. The MAC may have a function of demultiplexing the MAC PDUs provided from the PHY and providing the demultiplexed MAC PDUs to a higher layer via the logical channels to which the respective MAC SDUs belong. The MAC may have a function of performing error correction through a Hybrid Automatic Repeat reQuest (HARQ). The MAC may have a function of reporting scheduling information. The MAC may have a function of performing priority processing among the terminal apparatuses by using dynamic scheduling. The MAC may have a function of performing priority processing among the logical channels in one terminal apparatus. The MAC may have a function of performing priority processing of resources overlapping in one terminal apparatus. The E-UTRA MAC may have a function of identifying Multimedia Broadcast Multicast Services (MBMS). The NR MAC may have a function of identifying a Multicast Broadcast Service (MBS). The MAC may have a function of selecting a transport format. The MAC may have a function of performing Discontinuous Reception (DRX) and/or Discontinuous Transmission (DTX), a function of performing a Random Access (RA) procedure, a Power Headroom Report (PHR) function of reporting information of transmittable power, a Buffer Status Report (BSR) function of reporting data volume information of a transmission buffer, and the like. The NR MAC may have a Bandwidth Adaptation (BA) function. A MAC PDU format used in the E-UTRA MAC and a MAC PDU format used in the NR MAC may be different from each other. The MAC PDU may include a MAC control element (MAC CE) being an element for performing control in the MAC.

The MAC sublayer may additionally provide, on the PC5 interface, services and functions, such as radio resource selection for selecting a radio resource for sidelink transmission, filtering of packets received through sidelink communication, priority processing between the uplink and the sidelink, reporting of Sidelink Channel State Information (Sidelink CSI).

Mapping, which is used in E-UTRA and/or NR, between a sidelink (SL) logical channel and a sidelink logical channel and a transport channel will be described.

A Sidelink Broadcast Control Channel (SBCCH) may be a sidelink logical channel for broadcasting sidelink system information from one terminal apparatus to one or multiple terminal apparatuses. The SBCCH may be mapped to an SL-BCH that is a sidelink transport channel.

A Sidelink Control Channel (SCCH) may be a sidelink logical channel for transmitting control information such as a PC5-RRC message and a PC5-S message from one terminal apparatus to one or multiple terminal apparatuses. The SCCH may be mapped to an SL-SCH that is a sidelink transport channel.

A Sidelink Traffic Control Channel (STCH) may be a sidelink logical channel for transmitting user information from one terminal apparatus to one or multiple terminal apparatuses. The STCH may be mapped to the SL-SCH that is a sidelink transport channel.

An example of the functions of the RLC will be described. The RLC may be referred to as an RLC sublayer. The E-UTRA RLC may have a function of segmenting (Segmentation) and/or concatenating (Concatenation) data provided from the PDCP of an upper layer, and providing the segmented and/or concatenated data to a lower layer. The E-UTRA RLC may have a function of reassembling (reassembly) and re-ordering data provided from a lower layer, and providing the reassembled and re-ordered data to a higher layer. The NR RLC may have a function of assigning data provided from the PDCP of a higher layer with a sequence number independent of a sequence number assigned in the PDCP. The NR RLC may have a function of segmenting (Segmentation) data provided from the PDCP and providing the segmented data to a lower layer. The NR RLC may have a function of reassembling (reassembly) data provided from a lower layer, and providing the reassembled data to a higher layer. The RLC may have a data retransmission function and/or retransmission request function (AutomaticRepeat reQuest (ARQ)). The RLC may have a function of performing error correction using the ARQ. Control information that indicates data required to be retransmitted and that is transmitted from a receiving side to a transmitting side of the RLC in order to perform the ARQ may be referred to as a status report. A status report transmission indication transmitted from the transmitting side to the receiving side of the RLC may be referred to as a poll. The RLC may have a function of detecting data duplication. The RLC may have a function of discarding data. The RLC may have three modes, namely a Transparent Mode (TM), an Unacknowledged Mode (UM), and an Acknowledged Mode (AM). In the TM, segmentation of data received from a higher layer may not be performed, and addition of an RLC header may not be performed. A TM RLC entity may be a uni-directional entity, and may be configured as a transmitting TM RLC entity or as a receiving TM RLC entity. In the UM, segmentation and/or concatenation of data received from an upper layer, addition of an RLC header, and the like may be performed, but retransmission control of data may not be performed. A UM RLC entity may be a uni-directional entity, or may be a bi-directional entity. In a case that the UM RLC entity is a uni-directional entity, the UM RLC entity may be configured as a transmitting UM RLC entity or as a receiving UM RLC entity. In a case that the UM RLC entity is a bi-directional entity, the UM RRC entity may be configured as a UM RLC entity including a transmitting side and a receiving side. In the AM, segmentation and/or concatenation of data received from an upper layer, addition of an RLC header, retransmission control of data, and the like may be performed. An AM RLC entity may be a bi-directional entity, and may be configured as an AM RLC including a transmitting side and a receiving side. Note that data provided to a lower layer and/or data provided from a lower layer in the TM may be referred to as a TMD PDU. Data provided to a lower layer and/or data provided from a lower layer in the UM may be referred to as a UMD PDU. Data provided to a lower layer or data provided from a lower layer in the AM may be referred to as an AMD PDU. An RLC PDU format used in the E-UTRA RLC and an RLC PDU format used in the NR RLC may be different from each other. The RLC PDU may include an RLC PDU for data and an RLC PDU for control. The RLC PDU for data may be referred to as an RLC DATA PDU (RLC Data PDU). The RLC PDU for control may be referred to as an RLC CONTROL PDU (RLC Control PDU).

Note that, in the sidelink, the TM may be used for the SBCCH, only the UM is used in groupcast transmission and broadcast transmission, and the UM and the AM can be used in unicast transmission. In the sidelink, the UM in groupcast transmission and broadcast transmission supports only unidirectional transmission.

An example of the functions of the PDCP will be described. The PDCP may be referred to as a PDCP sublayer. The PDCP may have a function of maintenance of the sequence number. The PDCP may have a header compression and decompression function for efficiently transmitting, in wireless sections, user data such as an IP Packet and an Ethernet frame. A protocol used for header compression and decompression for an IP packet may be referred to as a Robust Header Compression (ROHC) protocol. A protocol used for header compression and decompression for an Ethernet frame may be referred to as an Ethernet (trade name) Header Compression (EHC) protocol. The PDCP may have a function of encrypting and decrypting data. The PDCP may have a function of data integrity protection and integrity verification. The PDCP may have a function of re-ordering. The PDCP may have a function of retransmitting the PDCP SDU. The PDCP may have a function of discarding data using a discard timer. The PDCP may have a Duplication function. The PDCP may have a function of discarding pieces of data received in a duplicate manner. The PDCP entity may be a bi-directional entity, and may include a transmitting PDCP entity and a receiving PDCP entity. A PDCP PDU format used in the E-UTRA PDCP and a PDCP PDU format used in the NR PDCP may be different from each other. The PDCP PDU may include a PDCP PDU for data and a PDCP PDU for control. The PDCP PDU for data may be referred to as a PDCP DATA PDU (PDCP Data PDU). The PDCP PDU for control may be referred to as a PDCP CONTROL PDU (PDCP Control PDU).

Note that, in the sidelink, there are the following restrictions on the functions and services of the PDCP.
(1) Out-of-order delivery may be supported exclusively in unicast transmission.
(2) Duplication on the PC5 interface is not supported.

An example of the functions of the SDAP will be described. The SDAP is a service data adaptation protocol layer. In the sidelink, the SDAP may have a function of performing mapping between sidelink QoS flows and sidelink data radio bearers (DRBs), which are sent from the terminal apparatus to another terminal apparatus. The SDAP may have a function of storing mapping rule information. The SDAP may have a function of performing marking of a QoS flow identifier (QoS Flow ID (QFI)). Note that the SDAP PDU may include an SDAP PDU for data and an SDAP PDU for control. The SDAP PDU for data may be referred to as an SDAP DATA PDU (SDAP Data PDU). The SDAP PDU for control may be referred to as an SDAP CONTROL PDU (SDAP Control PDU). Note that, in the sidelink, there may be one SDAP entity of the terminal apparatus per destination for any one of unicast transmission, groupcast transmission, and broadcast transmission associated with the destination. Reflective QoS is not supported on the PC5 interface.

An example of the functions of the RRC will be described. RRC may support services and functions on the PC5 interface such as forwarding of PC5-RRC messages between peer UEs, maintenance and release of the PC5-RRC connection between two UEs, and detection of a failure in sidelink radio link for PC5-RRC connection. The PC5-RRC connection is considered to be a logical connection between two UEs corresponding to a pair of a source L2ID and a destination L2ID and to be established after a corresponding PC5 unicast link is established. There is a one-to-one correspondence between the PC5-RRC connection and the PC5 unicast link. The UE may have multiple PC5-RRC connections to one or multiple UEs for different pairs of source L2IDs and destination L2IDs. A separate PC5-RRC procedure and separate messages may be used for the UE to transfer UE capabilities and sidelink configurations to peer UE. Both peer UEs may exchange the UE capabilities and sidelink configurations thereof with each other using a separate bi-directional procedure. In a case of being uninterested in the sidelink transmission, the UE releases the PC5-RRC connection in a case that a failure in sidelink radio link for the PC5-RRC connection is detected and that the Layer-2 link release procedure is completed.

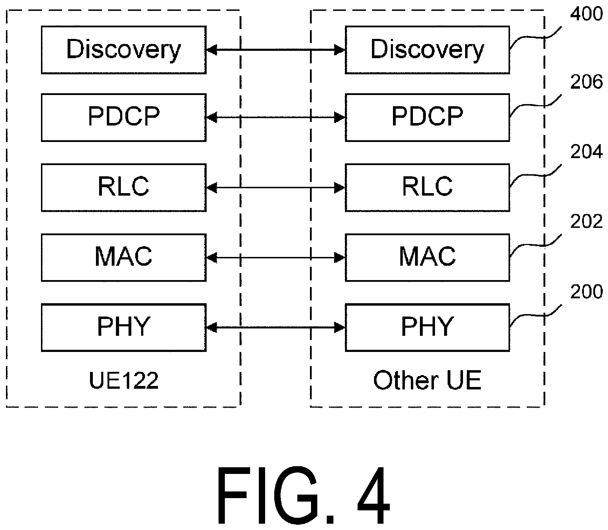

A terminal apparatus capable of sidelink communication may perform discovery. Discovery may include Model A and Model B. FIG. 4 illustrates a protocol stack used in discovery. Mode A may use a single discovery protocol message and Model B may use two discovery protocol messages. The single discovery protocol message in Model A may be an Announcement message, and the discovery protocol message in Model B may include a Solicitation message and a Response message. The outline of a procedure for Model A and Model B in ProSe Direct Discovery will be described below.

In Model A, a UE that transmits an announce message may be referred to as an Announcing UE, and a UE that monitors the announce message may be referred to as a Monitoring UE. The announce message may include information such as a discovery message type, a ProSe Application Code or a ProSe Restricted Code, a security protection element, and may additionally include metadata information. The announce message is transmitted using a Destination Layer-2 ID (destination L2ID) and a Source Layer-2 ID (source L2ID), and the monitoring UE determines the destination L2ID to receive the announce message. Note that the destination L2ID may be a Layer-2 identifier of the destination UE, and the source L2ID may be a Layer-2 identifier of the source UE.

In Model B, a UE transmitting a solicitation message may be referred to as a discoverer UE, and a UE receiving the solicitation message and/or a UE transmitting a response message to the discoverer UE may be referred to as a discoveree UE. The solicitation message may include information such as a type of the discovery message, a ProSe Query Code, and a security protection element. The solicitation message is transmitted using the destination L2ID and the source L2ID, and the discoveree UE determines the destination L2ID to receive the solicitation message. The discoveree UE responding to the solicitation message transmits the response message. The response message may include information such as the discovery message type, a ProSe Response Code, and the security protection element, and may additionally include metadata information. The response message is transmitted using the source L2ID, and the destination L2ID is set to the source L2ID of the received solicitation message.

Discovery may include types other than ProSe Direct Discovery in which another UE is discovered in order to perform direct communication with the other UE, and may include Group member Discovery in which one or multiple UEs are discovered in order to perform communication within a group using a sidelink, 5G ProSe UE-to-Network Relay Discovery in which candidate relay UEs are discovered in order to connect to the network via a relay UE, and the like. Although the above-described discovery is an example of discovery provided by an application called ProSe, in addition to the above-described type, different types of discovery may be present according to an application or service for sidelink communication. Information included in the discovery protocol message may vary according to the type of discovery, and an additional message may be transmitted to transmit additional information.

FIG. 4 is a diagram of an example of a protocol architecture including the discovery protocol according to the present embodiment. As illustrated in FIG. 4, a protocol stack of a discovery plane including the discovery protocol may include the Physical layer (PHY) 200 which is a radio physical layer, the Medium Access Control (MAC) 202 which is a medium access control layer, the Radio Link Control (RLC) 204 which is a radio link control layer, a Packet Data Convergence Protocol (PDCP) 206 which is a packet data convergence protocol layer, and Discovery 400 which is a discovery protocol layer. The Discovery 400 may be a protocol used to handle procedures related to discovery. An interface between UEs performing discovery may be referred to as PC5 D.

Multiple resource pools for transmitting the discovery message may be configured, and one or multiple resource pools may be configured as dedicated resource pools for discovery. In a case that a dedicated resource pool for discovery is configured, the UE may use the dedicated resource pool for discovery as a resource pool for transmitting the discovery message, and in a case that no dedicated resource pool for discovery is configured, the UE may use the resource pool for sidelink communication as the resource pool for transmitting the discovery message. Note that multiple resource pools for sidelink communication may be configured together with multiple dedicated resource pools for discovery. Each resource pool may be configured by dedicated signaling for UE or may be preconfigured.

UE-to-UE relay in the sidelink will be described. The UE-to-UE relay may refer to a technology of communicating via sidelink communication with a Relay UE in a case that the Source UE communicates with the Destination UE. The source UE, the destination UE, and the relay UE may be referred to by different names. The term "UE-to-UE relay" may also be referred to as a U2U relay.

The Reference Signal Received Power (RSRP) measured in the sidelink may be, for example, the following RSRP. The following RSRP may be referred to as SL-RSRP.
(a) PSBCH RSRP
(b) PSSCH RSRP
(c) PSCCH RSRP

The PSBCH-RSRP (PSBCH RSRP) may be defined as a linear average of power contributions of resource elements carrying multiple DemodulationReference Signals (DMRSs) associated with the PSBCH. The PSSCH-RSRP (PSSCH RSRP) may be defined as a linear average of power contributions of resource elements of antenna ports transmitting multiple DMRSs associated with the PSSCH, and in a case that there are multiple antenna ports, values of RSRP for each antenna port may be summed. The PSCCH-RSRP (PSCCH RSRP) may be defined as a linear average of power contributions of resource elements carrying multiple DMRS associated with the PSCCH. Note that the DMRS may be used to demodulate, for example, signals of the PSBCH, the PSSCH, and the PSCCH. The terminal, the terminal apparatus may measure the RSRP (SD-RSRP) of the discovery message using the power contribution of a resource element that transmits the DMRS associated with the discovery message.

In the measurement in the sidelink, the UE 122 may measure the following quantities in addition to the SL-RSRP.
(a) Sidelink received signal strength indicator (SL RSSI)
(b) Sidelink channel Occupancy ratio (SL CR)
(c) Sidelink channel busy ratio (SL CBR)

NR sidelink communication includes two resource allocation modes. Mode 1 refers to a mode in which the UE performs sidelink transmission by using a resource scheduled by the base station, and Mode 2 refers to a mode in which the UE automatically selects a resource to perform sidelink transmission. In Mode 1, the UE needs to be RRC_CONNECTED, and in Mode 2, the UE is capable of sidelink transmission regardless of the RRC state or whether the UE is inside or outside the NG-RAN. In Mode 2, the UE automatically selects a resource capable of sidelink transmission from one or multiple resource pools configured before sidelink transmission is performed.

Based on the description in the above, various embodiments will be described. Note that the processing described above may be applied to processing not described in the following.

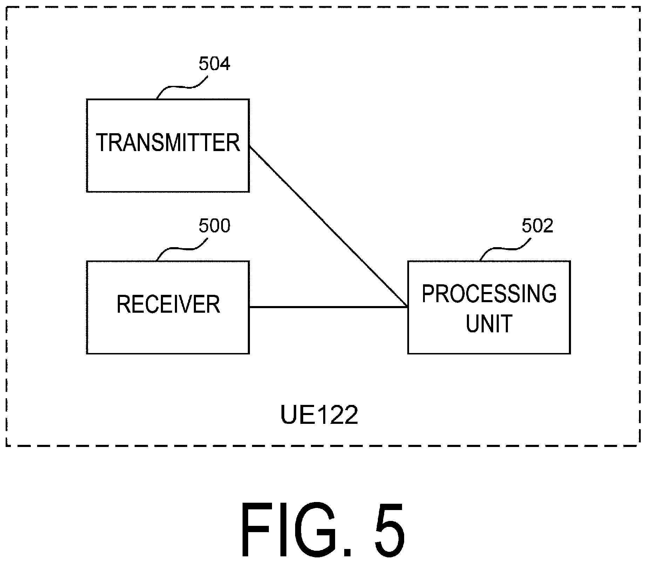

FIG. 5 is a block diagram illustrating a configuration of the terminal apparatus (UE 122) according to the present embodiment. Note that FIG. 5 illustrates only the main components closely related to the present embodiment in order to avoid complexity of description.

The UE 122 illustrated in FIG. 5 includes a receiver 500 that receives control information (SCI, MAC control elements, RRC signaling, and the like), information including the discovery message and user data, and the like from another terminal apparatus, a processing unit 502 that performs processing in accordance with parameters included in the received control information and the like, and a transmitter 504 that transmits control information (SCI, MAC control elements, RRC signaling, and the like), information including the discovery message and user data, and the like to another terminal apparatus. The processing unit 502 may include a part or all of functions of various layers (for example, the physical layer, the MAC layer, the RLC layer, the PDCP layer, the SDAP layer, the RRC layer, the PC5-S layer, the Discovery layer, and an application layer). That is, the processing unit 502 may include a part or all of a physical layer processing unit (PHY processing unit), a MAC layer processing unit (MAC processing unit), an RLC layer processing unit (RLC processing unit), a PDCP layer processing unit (PDCP processing unit), an SDAP processing unit, an RRC layer processing unit (RRC processing unit), a PC5-S layer processing unit (PC5-S processing unit), a Discovery layer processing unit (Discovery processing unit), and an application layer processing unit.

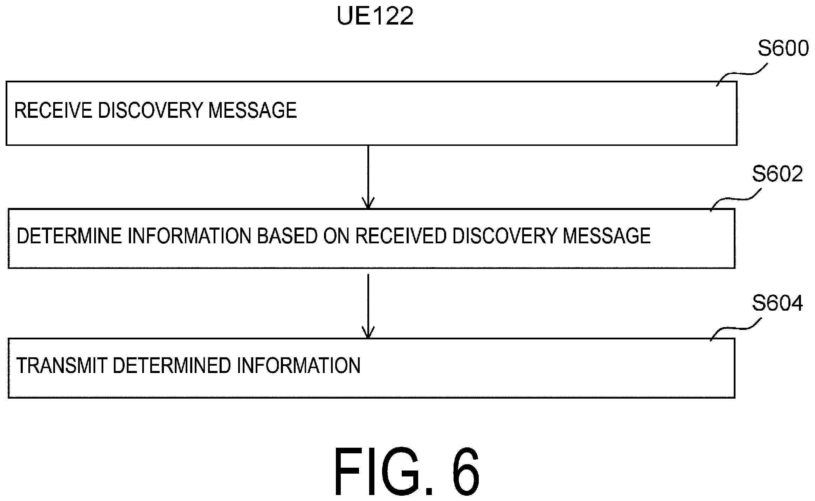

An example of an embodiment in one aspect of the present invention will be described with reference to FIG. 6.

In a case of receiving a discovery message from the first terminal apparatus in step S600, the UE 122 capable of sidelink communication determines information to be transmitted to the second terminal apparatus based on the discovery message received in step S602, and provides the information to the second terminal apparatus in step S604.

In step S602, the information transmitted by the UE 122 to the second terminal apparatus based on the discovery message may be, for example, the RSRP (SD-RSRP) measured in the received discovery message, or may be, for example, an offset value determined based on the RSRP (SD-RSRP) measured in the received discovery message. Additionally or alternatively, in step S602, the information transmitted by the UE 122 to the second terminal apparatus based on the discovery message may be, for example, the RSRP (SL-RSRP) measured through sidelink communication with the first terminal apparatus, or may be, for example, an offset value determined based on the RSRP (SL-RSRP) measured through sidelink communication with the first terminal apparatus. Additionally or alternatively, in step S602, the information transmitted by the UE 122 to the second terminal apparatus based on the discovery message may be, for example, a path loss measured in the received discovery message, or may be, for example, an offset value determined based on the path loss measured in the received discovery message. Note that, even in a case that the UE performs sidelink communication with the first terminal apparatus, the SD-RSRP, the path loss, or the like may be used instead of the SL-RSRP.

In step S604, the UE 122 providing the information to the second terminal apparatus may be, for example, transmitting, to the second terminal apparatus, the discovery message including the information. The information may be provided from the AS layer to a layer higher than the AS layer, and may be transmitted to the second terminal apparatus by the layer higher than the AS layer by including the information in the discovery message, or may be transmitted to the second terminal apparatus as a MAC Control Element (MAC CE).

In a case of receiving, from one or multiple terminal apparatuses, the discovery message including the information, the second terminal apparatus may determine which terminal apparatus is to be selected as a relay terminal (Relay UE) in U2U relay to the first terminal apparatus by using the information and the RSRP (SD-RSRP) of the received discovery message. Alternatively, in a case of performing sidelink communication with the terminal apparatus transmitting the discovery message, the second terminal apparatus may make the determination by using the RSRP (SL-RSRP) of the sidelink communication or the path loss of the received discovery message. For example, in a case that the offset value of the SD-RSRP is provided as the information, the second terminal apparatus may evaluate the RSRP (SD-RSRP) of the received discovery message in consideration of the provided offset value.

Note that, instead of passing the information to the second terminal apparatus, the UE 122 may select, according to the SD-RSRP, the SL-RSRP, the path loss, or the offset value, the resource pool for transmitting the discovery message to be transmitted to the second terminal apparatus. For example, in a case that the SD-RSRP is used and is in a first range, the discovery message may be transmitted using a first resource pool, and in a case that the SD-RSRP is used and is in a second range, the discovery message may be transmitted using a second resource pool. In a case that the UE 122 transmits the discovery message using the first resource pool and the second terminal apparatus receives the discovery message in a resource pool corresponding to the first resource pool, the UE 122 may determine that the SD-RSRP is in the first range. The second terminal apparatus may evaluate the RSRP of the received discovery message based on the above-described determination in order to determine whether to select the UE 122 as the relay UE in the U2U relay.

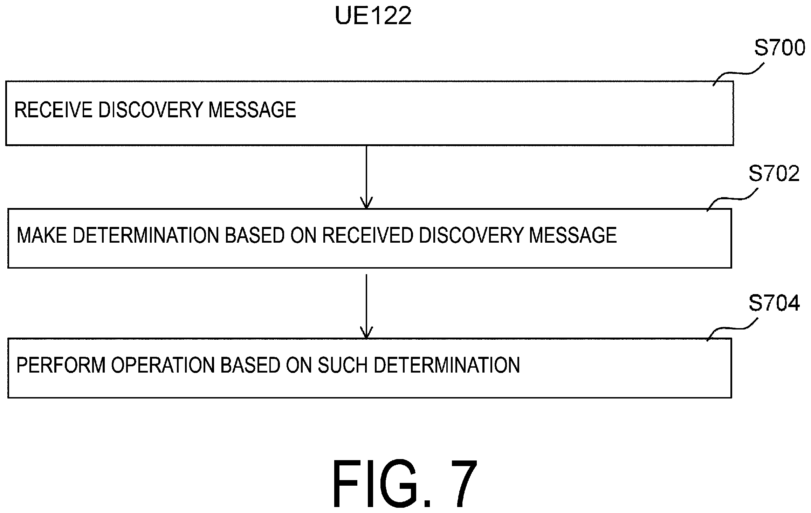

Another embodiment of one aspect of the present invention will be described with reference to FIG. 7.

In a case of receiving a discovery message from the first terminal apparatus in step S700, the UE 122 capable of sidelink communication makes a determination based on the received discovery message in step S702, and operates based on the determination in step S704.

In step S702, the determination may be, for example, determining whether the RSRP (SD-RSRP) of the received discovery message is better than a threshold. Additionally or alternatively, in step S702, determination may be, for example, determining whether the path loss of the received discovery message is better than a threshold. Additionally or alternatively, in step S702, the determination may be, for example, in a case that sidelink communication with the first terminal apparatus is performed, determining whether the RSRP (SL-RSRP) in the sidelink communication is better than a threshold. Note that the SD-RSRP being better than the threshold may mean that the SD-RSRP is equal to or greater than the threshold, and the SD-RSRP being worse than the threshold may mean that the SD-RSRP is less than the threshold. The path loss being better than the threshold may mean that the path loss is equal to or less than the threshold, and the path loss being worse than the threshold may mean that the path loss is greater than the threshold. The SL-RSRP being better than the threshold may mean that the SL-RSRP is equal to or greater than the threshold, and the SL-RSRP being worse than the threshold may mean that the SL-RSRP is less than the threshold. Note that the determination of whether the RSRP or path loss is equal to or greater than the threshold or is less than the threshold may be replaced with the determination of whether the RSRP or path loss is greater than the threshold or is equal to or less than the threshold.

In a case that, in step S702, the SD-RSRP, the path loss, or the SL-RSRP is determined to be better than the threshold, then in step S704, for example, the operation may be, for example, transmitting, to the second terminal apparatus, a discovery message based on the received discovery message, and additionally or alternatively, for example, the operation may be transferring the received discovery message to a higher layer (Discovery). In a case that, in step S702, the SD-RSRP, the path loss, or the SL-RSRP is determined to be worse than the threshold, then in step S704, the operation may be, for example, not transmitting, to the second terminal apparatus, a discovery message based on the received discovery message, and additionally or alternatively, for example, the operation may be, for example, not transferring the received discovery message to a higher layer (Discovery).

The threshold for the UE 122 to determine whether the SD-RSRP, the path loss, or the SL-RSRP is good may be preset for the UE 122 by the network, or may be determined by the first terminal apparatus and transmitted through higher layer (RRC, application layer, or the like) signaling, or may be included in the MAC CE or the like, which may be transmitted together with the discovery message. In a case that the determined threshold is transmitted in the application layer, the threshold may be transmitted as information included in a discovery message.

Note that the discovery message in each example may be a discovery message used for the U2U relay. For example, the discovery message transmitted from the first terminal apparatus may include information related to the first terminal apparatus and information related to the second terminal apparatus. For example, the discovery message transmitted from the UE 122 may include information related to the first terminal apparatus, information related to the UE 122, and information related to the second terminal apparatus. The information related to the UE 122 and each of the terminal apparatuses may be an identifier identifying each of the terminals, or may include other information in addition to or instead of the identifier. The discovery message may include information related to the type of the discovery message.

Note that, in each example, the first terminal apparatus, the second terminal apparatus, and multiple other terminal apparatuses may be terminal apparatuses capable of sidelink communication and having a configuration including a receiver, a processing unit, and a transmitter, similarly to the UE 122.

In a case that, in a UE-to-UE relay, a relay UE is selected using the operations illustrated in Non-Patent Documents 1, 5, and 6, each of the UEs can only evaluate the quality of the link with the other UE directly connected thereto. However, according to each example, the UE can select a more suitable relay UE by evaluating the relay path including not only the link quality between the UE and the relay UE but also the link quality between the relay UE and the other UE.

In the above description, expressions such as "be notified" and "receive an indication" may be replaced with each other.

In the above description, expressions such as "link", "map", and "associate" may be replaced with each other.

In the above description, expressions such as "included", "being included", and "was included" may be replaced with each other.

In the above description, "the" may be replaced with "above-described".

In the above description, expressions such as "determined that", "configured with", and "including" may be replaced with each other.

In the example of each processing or the example of the flow of each processing in the above description, a part or all of the steps need not be performed. In the example of each processing or the example of the flow of each processing in the above description, the order of the steps may be different from each other. In the example of each processing or the example of the flow of each processing in the above description, a part or all of the processing in each step need not be performed. In the example of each processing or the example of the flow of each processing in the above description, the order of processing in each step may be different from each other. In the above description, "to perform B based on satisfaction of A" may be replaced with "to perform B". In other words, "to perform B" may be performed independently of "satisfaction of A".

Note that in the above description, "A may be replaced with B" may include the meaning that B is replaced with A in addition to replacement of A with B. In a case that the above description contains "C may be D" and "C may be E", this means inclusion of "D may be E". In a case that the above description contains "F may be G" and "G may be H", this may mean inclusion of "F may be H".

In the above description, in a case that a condition "A" and a condition "B" are conflicting conditions, the condition "B" may be expressed as "other" condition of the condition "A".

A program running on an apparatus according to the present embodiment may serve as a program that controls a Central Processing Unit (CPU) and the like to cause a computer to operate in such a manner as to realize the functions of the present embodiment. Programs or the information handled by the programs are temporarily loaded into a volatile memory such as a Random Access Memory (RAM) while being processed, or stored in a non-volatile memory such as a flash memory, or a Hard Disk Drive (HDD), and then read, modified, and written by the CPU, as necessary.

Note that the apparatuses in the above-described embodiment may be partially enabled by a computer. In this case, a program for implementing this control function may be implemented by recording the program in a computer-readable recording medium and causing a computer system to read and perform the program recorded in the recording medium. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically stores a program for a short period of time, such as a communication line in a case that the program is transmitted via a network such as the Internet or via a communication line such as a telephone line, and a medium that stores the program for a certain period of time, such as a volatile memory inside the computer system that is a server or a client in this case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of known type, a controller, a microcontroller, or a state machine instead. The general-purpose processor or the above-mentioned circuits may include a digital circuit, or may include an analog circuit. Furthermore, in a case that with advances in semiconductor technology, a circuit integration technology appears that replaces the present integrated circuits, it is also possible to use an integrated circuit based on the technology.

Note that the present embodiment is not limited to the above-described embodiments. Although apparatuses have been described as an example in the embodiment, the present embodiment is not limited to these apparatuses, and is applicable to a stationary type or a non-movable type electronic apparatus installed indoors or outdoors such as a terminal apparatus or a communication apparatus, for example, an AV device, a kitchen device, a cleaning or washing machine, an air-conditioning device, office equipment, a vending machine, and other household appliances.

Although the present embodiment has been described in detail above referring to the drawings, the specific configuration is not limited to the present embodiment and includes, for example, design changes within the scope that does not depart from the gist of the present embodiment. Furthermore, various modifications are possible within the scope of the present embodiment defined by claims, and embodiments that are made by suitably combining technical means disclosed according to the different embodiments are also included in the technical scope of the present embodiment. In addition, a configuration in which components, which are described in the embodiment described above, having similar effects are interchanged is also included in the present invention.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

100 ng-eNB
102 gNB
110, 112, 114 Interface
122 UE
200 PHY
202 MAC
204 RLC
206 PDCP
208 RRC
210 PC5-S
310 SDAP
400 Discovery
500 Receiver
502 Processing unit
504 Transmitter

## Claims

1. A terminal apparatus capable of sidelink communication, the terminal apparatus comprising:
a processing unit;
a receiver configured to receive a discovery message from a first terminal apparatus; and
a transmitter, wherein
the processing unit determines information to be provided to a second terminal apparatus, based on Reference Signal Received Power (RSRP) of the discovery message received from the first terminal apparatus, and
the transmitter transmits, to the second terminal apparatus, a discovery message including the information.

2. A method for a terminal apparatus capable of sidelink communication, the method comprising the steps of:
receiving a discovery message from a first terminal apparatus and
determining information to be provided to a second terminal apparatus, based on Reference Signal Received Power (RSRP) of the discovery message received from the first terminal apparatus; and
transmitting, by a transmitter to the second terminal apparatus, a discovery message including the information.

3. An integrated circuit to be mounted on a terminal apparatus capable of sidelink communication, the integrated circuit performing:
a function of receiving a discovery message from a first terminal apparatus;
a function of determining information to be provided to a second terminal apparatus, based on Reference Signal Received Power (RSRP) of the discovery message received from the first terminal apparatus; and
a function of transmitting, by a transmitter to the second terminal apparatus, a discovery message including the information.
